# EUROPEAN PATENT APPLICATION

(11) **EP 4 752 964 A1**
(43) Date of publication of application: **03.06.2026**
(21) Application number: 25215890.2
(22) Date of filing: 14.11.2025
(51) Int. Cl.: H01M 4/136, H01M 4/1397, H01M 4/36, H01M 4/525, H01M 4/58, H01M 4/62, H01M 10/0525

(54) **POSITIVE ELECTRODE ACTIVE MATERIAL, ELECTRODE, AND BATTERY**

(30) Priority: 29.11.2024 JP 2024208852
(71) Applicant: Toyota Jidosha Kabushiki Kaisha, Toyota-shi, Aichi-ken 471-8571 (JP)
(72) Inventor: MAHARA, Takanori, Toyota-shi, 471-8571 (JP)
(74) Representative: Kuhnen & Wacker Patent- und Rechtsanwaltsbüro PartG mbB

(57) **Abstract**

A positive electrode active material includes a primary particle (1), wherein the primary particle (1) contains an olivine-type phosphate compound, the primary particle (1) has a cross-section in at least part of which a streak structure is provided, the streak structure includes a first region (1a) and a second region (1b), the second region (1b) contains an ion conductor containing phosphorus at a higher concentration as compared to the first region (1a), the second region (1b) extends in a streaky manner, and the first region (1a) is divided into two or more by the second region (1b).

## Description

### BACKGROUND OF THE INVENTION

### 1. Field of the Invention

The present disclosure relates to a positive electrode active material, an electrode, and a battery.

### 2. Description of Related Art

Japanese Unexamined Patent Application Publication No. 2021-009838 (JP 2021-009838 A) discloses a granule of manganese-rich lithium manganese iron phosphate particles and iron-rich lithium manganese iron phosphate particles.

### SUMMARY OF THE INVENTION

An olivine-type phosphate compound may be assemblies of primary particles (secondary particles). An olivine-type phosphate compound tends to have low rate characteristics. An attempt to improve rate characteristics has been made by coating the surfaces of the primary particles with carbon. However, it is considered that ion conductivity inside the primary particles does not change even when the surfaces of the primary particles are coated with carbon. That is, there is still room for improvement in rate characteristics.

The present disclosure provides a positive electrode active material capable of improving rate characteristics, an electrode, and a battery.

Hereinbelow, the technical configurations and functions and effects of the present disclosure will be described. It should be noted that action mechanisms include presumptions. The action mechanisms do not limit the technical scope of the present disclosure.

A positive electrode active material according to a first aspect of the present disclosure includes a primary particle. The primary particle contains an olivine-type phosphate compound and has a cross-section in at least part of which a streak structure is provided, and wherein the streak structure includes a first region and a second region, the second region contains an ion conductor containing phosphorus at a higher concentration as compared to the first region and extends in a streaky manner, and the first region is divided into two or more by the second region.

The second region contains P at a higher concentration as compared to the first region. In the second region, ion conductivity is considered to be promoted as compared to the first region. Therefore, the second region is considered to be able to function as an ion diffusion path. In the cross-section of the primary particle, the second region extends in a streaky manner. Therefore, the second region is considered to spread like a layer in the primary particle. Since the second region (ion diffusion layer) spreads so as to divide the first region (bulk), rate characteristics are expected to improve.

In the positive electrode active material according to the above aspect, both ends of the second region may be positioned in a surface of the primary particle.

In this case, the second region (ion diffusion layer) spreads so as to connect to an outside of the primary particle, and therefore rate characteristics are expected to improve.

In the positive electrode active material according to the above aspect, the first region may be divided into three or more by the second region; and an average width of divided sections in a direction intersecting with a direction in which the second region extends may be 10 nm to 100 nm.

Hereinafter, the "average width of divided sections" will also be referred to as an "average division width". When the average division width is 10 nm to 100 nm, rate characteristics are expected to improve.

In the positive electrode active material according to the above aspect, the average width may be smaller than 1/2 of a maximum Feret diameter of the primary particle.

When the average division width "Da" is smaller than 1/2 of the maximum Feret diameter "D" of the primary particle, rate characteristics are expected to improve. That is, when a relationship of "Da < D/2" is satisfied, rate characteristics are expected to improve.

In the positive electrode active material according to the above aspect, the average division width may be 65 nm to 94 nm.

When the average division width is 65 nm to 94 nm, rate characteristics are expected to improve.

The positive electrode active material according to the above aspect may further include a secondary particle, the secondary particle including the primary particles.

The primary particles may be present independently from each other or may form secondary particles.

In the positive electrode active material according to the above aspect, the olivine-type phosphate compound may contain at least one selected from the group consisting of lithium iron phosphate, lithium manganese phosphate, and lithium manganese iron phosphate.

An electrode according to a second aspect of the present disclosure includes a positive electrode layer. The positive electrode layer contains the positive electrode active material according to the above aspect.

The positive electrode layer may also be referred to as a "positive electrode active material layer", a "positive electrode mixture layer", or the like. The "electrode" may either be a "monopolar electrode (positive electrode)" or a "bipolar electrode" as long as a positive electrode layer is included.

A battery according to a third aspect of the present disclosure includes the electrode according to the above aspect.

In the battery according to the above aspect, the battery has a bipolar structure.

The bipolar structure can be formed by stacking bipolar electrodes. It is expected that the bipolar structure improves, for example, output characteristics.

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram of cross-section of a primary particle according to the present embodiment;
FIG. 2 is a conceptual diagram of a secondary particle according to the present embodiment;
FIG. 3 is a schematic perspective view of a battery according to a present embodiment;
FIG. 4 is a schematic cross-sectional view taken along the line IV- IV in FIG.3; and
FIG. 5 is a table showing experimental results.

### DETAILED DESCRIPTION OF EMBODIMENTS

### Terms and Phrases

The terms "comprise", "contain", "have" and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, a particle may refer to a plurality of particles, assemblies of particles, or powder particles. It should be noted that a "plurality of particles" may also be referred to as a "group of particles".

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%". "Equal to or more than" and "equal to or less than" are expressed by inequality signs having an equal sign "≤" and "≥", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, ±5%, ±3%, or ±1%. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on the similar product to be used.

A "primary particle" refers to a particle apparently having no grain boundary in a Scanning Electron Microscope (SEM) image of a powder. The magnification of the SEM image may be, for example, 10000 times to 30000 times.

The cross-section of the primary particle is evaluated by the following procedure. A positive electrode active material (powder) is subjected to grinding, polishing, or the like to allow the insides of primary particles to expose to form cross-sections. The cross-sections may be, for example, fracture surfaces, cut surfaces, polished surfaces, machined surfaces, or the like. The cross-sections are observed by SEM-Energy Dispersive x-ray Spectroscopy (SEM-EDS), Transmission Electron Microscope-EDS (TEM-EDS), Electron Probe Micro Analyzer (EPMA), or the like.

When the primary particle has a carbon layer formed on the surface thereof, an element concentration ratio "P/C" of phosphorus "P" to carbon "C" is obtained by qualitative analysis in mapping observation of the entire cross-section. A region having an element concentration ratio "P/C" of more than 0.2 is regarded as the inside (i.e., a portion other than the carbon layer) of the primary particle.

The mapping image of phosphorus "P" is obtained by mapping observation of the inside of the primary particle. Based on the maximum luminance and minimum luminance of the mapping image, the mapping image is normalized. In the normalized mapping image, a region having a luminance of 75% or more of the maximum value is regarded as a P concentrated region (i.e., a "second region"). A region having a luminance of less than 75% of the maximum value is regarded as a "first region".

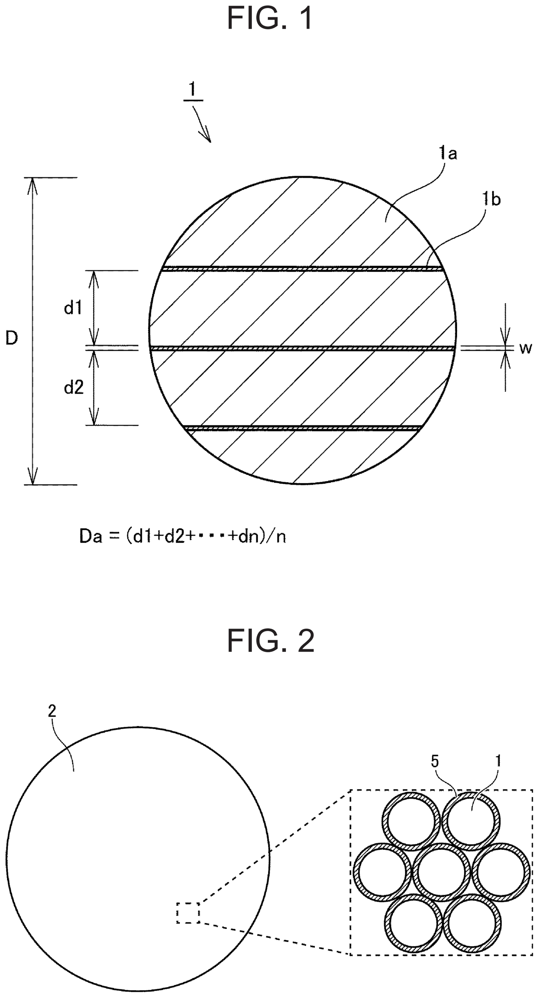

FIG. 1 is a conceptual diagram of cross-section of a primary particle according to the present embodiment. A primary particle 1 includes a first region 1a and second regions 1b. The second regions 1b extend in a streaky manner (like parallel lines). In a direction intersecting with a direction in which the second regions 1b extend, the first region 1a is divided into n sections by the second regions 1b. The width of each of the divided sections is considered to be equal to a distance between the adjacent second regions 1b "d1, d2, ... , dn". An average division width "Da" is determined by a calculation formula "Da = (d1 + d2 + ... + dn)/n". It should be noted that when the second regions 1b are not parallel to each other, one straight line is drawn so as to intersect, at right angle, with as much of the second region 1b as possible. The length of each line segment in the straight line divided by the second regions 1b is regarded as the distance "d1, d2, ... , dn".

It should be noted that measurement of various dimensions and shape analysis using an SEM image, a mapping image, and the like may be performed using, for example, image analysis software "Image J".

The "maximum Feret diameter" refers to the length of long side of minimum bounding rectangle (MBR) of outline of a particle in a two-dimensional image (e.g., an SEM image) of the particle.

The chemical composition of a compound can be measured by Inductively Coupled Plasma Atomic Emission Spectroscopy (ICP-AES). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a device sold under the trade name of "PS3520 UVDDII (manufactured by Hitachi High-Tech Science Corporation)" may be used.

A stoichiometric composition formula represents a typical example of a compound. A compound may have a non-stoichiometric composition. For example, "Al₂O₃" is not limited to a compound having an amount-of-substance ratio (mole ratio) of "Al/O = 2/3". Unless otherwise specified, "Al₂O₃" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group consisting of functional group introduction, atomic substitution, oxidation, reduction, and another chemical reaction. The number of modification sites may be one or more. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

"D50" refers to a particle diameter corresponding to 50% of a cumulative amount in a volume-based particle size distribution (cumulative size distribution). The volume-based particle size distribution is measured by a laser diffraction particle size distribution measurement device.

### Positive Electrode Active Material

A positive electrode active material may be in, for example, a powder form. The D50 of the positive electrode active material may be, for example, 5 µm or more, 10 µm or more, 15 µm or more, or 20 µm or more. The D50 of the positive electrode active material may be, for example, 30 µm or less, 25 µm or less, 20 µm or less, 15 µm or less, or 10 µm or less.

### Primary Particle

The positive electrode active material includes the primary particle 1. The primary particles 1 may be present independently from each other. The primary particles 1 may form secondary particles 2 that will be described later. The primary particle 1 may have any shape. The primary particle 1 may be, for example, spherical, rod-like, angular, or scale-like. The primary particle 1 contains an olivine-type phosphate compound. Hereinafter, the "olivine-type phosphate compound" may be abbreviated as an "olivine".

The maximum Feret diameter of the primary particle may be, for example, 20 nm to 300 nm. The maximum Feret diameter of the primary particle may be, for example, 25 nm or more, 50 nm or more, 75 nm or more, 100 nm or more, 150 nm or more, 200 nm or more, or 250 nm or more. The maximum Feret diameter of the primary particle may be, for example, 250 nm or less, 200 nm or less, 150 nm or less, 100 nm or less, 75 nm or less, or 50 nm or less.

The primary particle 1 has a cross-section in at least part of which a streak structure is provided. The streak structure may be provided throughout the entire cross-section. It is expected that the streak structure improves rate characteristics. The streak structure includes a first region 1a and a second region 1b. The second region 1b extends in a streaky manner. The second region 1b may extend, for example, linearly. The second region 1b may extend, for example, curvilinearly. The second region 1b may extend, for example, wavily. The second region 1b may be provided as, for example, numerous lines (an assembly of parallel lines).

The second region 1b may extend, for example, continuously. The second region 1b may include, for example, a discrete portion. For example, the second region 1b may be discontinuous so as to have a portion that looks like a dotted line or a broken line.

The starting end and terminal end of the second region 1b may be present, for example, inside the cross-section. For example, at least one of the starting end and terminal end of the second region 1b may be positioned in the surface of the primary particle. For example, both ends of the second region 1b may be positioned in the surface of the primary particle 1. For example, when the second region 1b (ion conductive layer) extends across the primary particle 1, rate characteristics are expected to improve.

The second region 1b contains P at a higher concentration as compared to the first region 1a. As described above, the degree of the concentration is determined based on luminance in a mapping image. The first region 1a may contain, for example, an olivine (LiMPO₄, M = Fe, Mn). The second region 1b may contain, for example, lithium phosphate (Li₃PO₄).

The first region 1a is divided into two or more by the second region 1b. For example, in FIG. 1, the first region 1a is divided into four. The first region 1a and the second region 1b may alternately be arranged. The division number of the first region 1a may be, for example, 3 or more, 4 or more, 5 or more, 6 or more, 7 or more, 8 or more, 9 or more, 10 or more, 25 or more, or 50 or more. The division number of the first region 1a may be, for example, 100 or less, 75 or less, 50 or less, 25 or less, 10 or less, or 5 or less.

The average division width "Da" may be, for example, 10 nm to 100 nm. The average division width "Da" may be, for example, 20 nm or more, 30 nm or more, 40 nm or more, 50 nm or more, 60 nm or more, 65 nm or more, 70 nm or more, 80 nm or more, 90 nm or more, or 94 nm or more. The average division width "Da" may be, for example, 94 nm or less, 90 nm or less, 80 nm or less, 70 nm or less, 65 nm or less, 60 nm or less, 50 nm or less, 40 nm or less, 30 nm or less, or 20 nm or less. The average division width "Da" may be, for example, 65 nm to 94 nm.

The ratio "Da/D" of the average division width "Da" to the maximum Feret diameter "D" of the primary particle 1 may be, for example, less than 0.5. The ratio "Da/D" may be, for example, 0.4 or less, 0.3 or less, 0.2 or less, or 0.1 or less. The ratio "Da/D" may be, for example, 0.01 or more, 0.05 or more, 0.1 or more, 0.2 or more, 0.3 or more, or 0.4 or more.

The width "w" of the second region 1b may be, for example, less than 10 nm. The width "w" of the second region 1b may be, for example, 9 nm or less, 8 nm or less, 7 nm or less, 6 nm or less, 5 nm or less, 4 nm or less, 3 nm or less, or 2 nm or less. The width of the second region 1b may be, for example, 2 nm or more, 3 nm or more, 4 nm or more, 5 nm or more, 6 nm or more, 7 nm or more, 8 nm or more, or 9 nm or more.

### Secondary Particle

FIG. 2 is a conceptual diagram of a secondary particle according to the present embodiment. The positive electrode active material may include a secondary particle 2. The secondary particle 2 includes the primary particles 1. The maximum Feret diameter of the secondary particle 2 may be, for example, 1 µm or more, 3 µm or more, 5 µm or more, 10 µm or more, or 15 µm or more. The maximum Feret diameter of the secondary particle 2 may be, for example, 20 µm or less, 15 µm or less, 10 µm or less, 5 µm or less, or 3 µm or less.

The secondary particle 2 may have any shape. The secondary particle 2 may be, for example, spherical, rod-like, angular, or massive. The sphericity of the secondary particle 2 may be, for example, 0.50 or more, 0.60 or more, 0.70 or more, 0.80 or more, or 0.90 or more. The sphericity of the secondary particle 2 may be, for example, 1.00 or less, 0.90 or less, 0.80 or less, 0.70 or less, 0.60 or less, or 0.50 or less. The "sphericity" refers to the degree of circularity in a two-dimensional image (e.g., an SEM image). The sphericity (degree of circularity) is determined by the following formula. The sphericity is an arithmetic average of 30 secondary particles 2.
Ψ = 4πS/L²
ψ: Sphericity (Degree of circularity)
π: Circle ratio
S: Sectional area of particle (Area of region surrounded by outline of particle)
L: Perimeter of particle (Length of outline of particle)

A carbon layer 5 may cover the surface of the primary particle 1. The carbon layer 5 may cover part of the surface of the primary particle or may cover the entire surface of the primary particle 1. The carbon layer 5 may be derived from, for example, sugar. The amount of the carbon layer 5 attached may be, for example, 0.1% or more, 0.5% or more, 1% or more, 2% or more, 3% or more, 4% or more, 5% or more, or 10% or more in terms of mass fraction relative to the olivine. The amount of the carbon layer 5 attached may be, for example, 20% or less, 15% or less, 10% or less, 5% or less, 4% or less, or 3% or less in terms of mass fraction relative to the olivine.

### Composition

The primary particle 1 contains an olivine. The olivine has a crystal structure (olivine structure) belonging to a space group Pnma. A space group to which the crystal structure belongs can be determined by an X-Ray Diffraction (XRD) pattern.

The olivine may further include, for example, a crystallized glass phase (olivine structure) or a glass phase in addition to a crystal phase (olivine structure). For example, a crystallized glass phase or the like can be formed by heating raw materials to vitrify them once and then cooling the resultant during synthesis. By setting specific crystallization conditions (cooling conditions), a polycrystal (lithium phosphate or the like) can be formed in gaps of a glass structure. The first region 1a is considered to be derived from the glass structure. The second region 1b is considered to be derived from the polycrystal. For example, the first region 1a may include at least one of the crystal phase and the crystallized glass phase of the olivine. For example, the second region 1b may contain a polycrystal of lithium phosphate.

The olivine may contain, for example, at least one selected from the group consisting of LFP, LMP, and LMFP. The olivine may contain, for example, at least one selected from the group consisting of LMP and LMFP. LMP and LMFP tend to have lower rate characteristics as compared to LFP. The present embodiment is considered to be particularly suitable for LMP and LMFP.

The olivine may have a composition represented by, for example, a general formula of "LiₐMn₁₋ₓFeₓPO₄". In the general formula, a Li compositional ratio "a" may be, for example, 0.5 or more, 0.6 or more, 0.7 or more, 0.8 or more, 0.9 or more, 1.0 or more, 1.1 or more, 1.2 or more, 1.3 or more, or 1.4 or more. In the general formula, the Li compositional ratio "a" may be, for example, 2.0 or less, 1.5 or less, 1.4 or less, 1.3 or less, 1.2 or less, 1.1 or less, 1.0 or less, 0.9 or less, 0.8 or less, 0.7 or less, or 0.6 or less. In the general formula, a relationship of, for example, "0.5 ≤ a ≤ 1.5" may be satisfied. In the general formula, a Fe compositional ratio "x" may be, for example, 0 or more, 0.1 or more, 0.2 or more, 0.3 or more, 0.4 or more, 0.5 or more, 0.6 or more, 0.7 or more, 0.8 or more, or 0.9 or more. In the general formula, the Fe compositional ratio "x" may be, for example, 1.0 or less, 0.9 or less, 0.8 or less, 0.7 or less, 0.6 or less, 0.5 or less, 0.4 or less, 0.3 or less, 0.2 or less, or 0.1 or less. In the general formula, a relationship of, for example, "0.2 ≤ x ≤ 0.5*"* may be satisfied.

A dopant may be added to the olivine. The dopant refers to an element other than lithium (Li), manganese (Mn), iron (Fe), phosphorus (P), and oxygen (O). The amount of the dopant added (amount fraction relative to amount-of-substance of Li) may be, for example, 0.01 to 0.1. The dopant may contain, for example, at least one selected from the group consisting of boron (B), nitrogen (N), halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium(Tm), ytterbium (Yb), lutetium (Lu), and actinide.

The positive electrode active material may further contain another component as long as it contains an olivine. The mixing ratio (mass ratio) between the olivine and the another component may be, for example, "olivine/another component = 9/1 to 1/9", "olivine/another component = 8/2 to 2/8", "olivine/another component = 7/3 to 3/7", or "olivine/another component = 6/4 to 4/6". The positive electrode active material may be, for example, a mixture of a powder of an olivine and a powder of another component. The another component may contain, for example, at least one selected from the group consisting of Li[NiCoMn]O₂ (layered structure), Li[NiCoAl]O₂ (layered structure), LiMnO₂ (rock salt structure), and Li[NiMn]₂O₄ (spinel structure). It should be noted that [NiCoMn] or the like indicates that the sum of the compositional ratios of elements in parentheses is 1. The compositional ratios of the individual elements in parentheses are not limited as long as the sum of them is 1.

### Liquid-Based Battery

In some present embodiments, a battery may be a liquid-based battery. The "liquid-based battery" refers to a battery including an electrolytic solution. For example, a polymer battery includes an electrolytic solution and therefore belongs to liquid-based batteries. In some present embodiments, the battery has a monopolar structure. In the monopolar structure, a power-generating element may be of a wound type or a lamination type. In some present embodiments, the battery has a bipolar structure. As an example, a battery having a bipolar structure (bipolar battery) will be described.

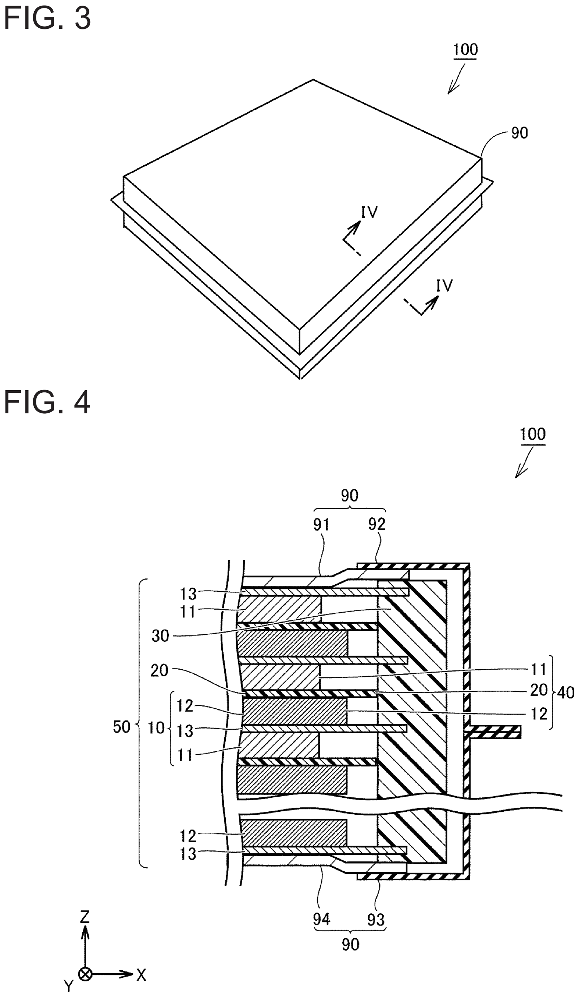

FIG. 3 is a schematic perspective view of a battery according to the present embodiment. FIG. 4 is a schematic sectional view taken along the line IV-IV shown in FIG.3. Hereinafter, a "perpendicular direction" refers to a normal direction relative to the surface of a sheet-shaped member (e.g., a foil or an electrode). An "in-plane direction" refers to any direction orthogonal to the perpendicular direction. In the diagram of the present embodiment, a Z-axis direction corresponds to the perpendicular direction. An X-axis direction and a Y-axis direction are examples of the in-plane direction.

A battery 100 includes an exterior body 90 and a power-generating element 50. The exterior body 90 houses the power-generating element 50. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element 50 at their ends in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element 50 includes a plurality of bipolar electrodes 10. The bipolar electrodes 10 are laminated in the perpendicular direction (Z-axis direction). Each of the bipolar electrodes 10 includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around its entire periphery in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element 50 includes a sealing material 30. The sealing material 30 is joined to the current collector foils 13 at its end in the in-plane direction. For example, the sealing material 30 may be thermally welded to the current collector foils 13. For example, the sealing material 30 may be disposed along the entire periphery in the in-plane direction. The sealing material may contain, for example, a resin material. The sealing material 30 seals spaces between the current collector foils 13 adjacent to each other in the perpendicular direction. Cells 40 are formed by sealing the spaces between the current collector foils 13 with the sealing material 30. The cells 40 are minimum units of the power-generating element 50. The battery 100 includes the cells 40 and therefore may also be referred to as a "bipolar module". Each of the cells 40 is hermetically sealed. The cells 40 are isolated from each other. Each of the cells 40 includes the positive electrode layer 11, a separator 20, the negative electrode layer 12, and an electrolytic solution.

### Positive Electrode Layer

The positive electrode layer 11 is attached to one side of the current collector foil 13. For example, the positive electrode layer 11 may have a groove. The positive electrode layer 11 may be formed, for example, in stripes. The positive electrode layer 11 contains a positive electrode active material. That is, the battery 100 includes a positive electrode active material. The details of the positive electrode active material are as described above.

The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group consisting of graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, MoS₂, or WO₃.

### Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The negative electrode layer 12 contains a negative electrode active material.

The negative electrode active material may be, for example, in a particulate or sheet form. The D50 of the negative electrode active material may be, for example, 1 µm or more, 5 µm or more, or 10 µm or more. The D50 of the negative electrode active material may be, for example, 30 µm or less, 20 µm or less, 15 µm or less, or 10 µm or less.

The negative electrode active material may contain any component. The negative electrode active material may contain, for example, at least one selected from the group consisting of a carbon-based active material, an alloy-based active material, a Si-C-composite material, Li metal, a Li-based alloy, and lithium titanate. In some present embodiments, the battery may be a Li metal negative electrode battery.

The carbon-based active material may contain, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group consisting of P, W, Al, and O. The another type of material may contain, for example, at least one selected from the group consisting of Al(OH)₃, AlOOH, Al₂O₃, WO₃, Li₂CO₃, LiHCO₃, and Li₃PO₄.

The alloy-based active material may contain, for example, at least one selected from the group consisting of Si, Li silicate, SiO, a Si-based alloy, tin (Sn), SnO, and an Sn-based alloy.

The SiO may have a composition represented by, for example, a general formula of "SiOₓ". In the general formula, a relationship of, for example, "0 < x < 2", "0.5 ≤ x ≤ 1.5", or "0.8 ≤ x ≤ 1.2" may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

### Separator

The separator 20 can separate the positive electrode layer 11 from the negative electrode layer 12. The separator 20 is electrically insulative. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 µm or less. The average pore diameter of the resin film may be, for example, 0.01 µm to 1 µm or 0.1 µm to 0.5 µm. The "average pore diameter" can be measured by mercury intrusion porosimetry. The resin film may have a Gurley value of, for example, 50 s/100 cm³ to 250 s/100 cm³. The Gurley value can be measured by a Gurley test method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 µm to 50 µm or 10 µm to 25 µm.

The resin film may have, for example, a single-layer structure. The resin film may consist of, for example, a PE layer. The skeleton of the PE layer is formed of PE. The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example, 5 µm to 20 µm. The PP layer may have a thickness of, for example, 3 µm to 10 µm.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 µm to 10 µm or 1 µm to 5 µm. The inorganic particles may contain, for example, a heat-resistant material. The inorganic particle layer containing a heat-resistance material is also referred to as " Heat Resistance Layer (HRL)". The inorganic particles may contain at least one selected from the group consisting of boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 µm to 10 µm or 0.5 µm to 3 µm. The inorganic particle layer may further contain a binder. The binder may contain, for example, at least one selected from the group consisting of an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 µm to 50 µm, 0.5 µm to 20 µm, 0.5 µm to 10 µm, or 1 µm to 5 µm. The organic particle layer contains organic particles. The organic particles may also be referred to as an "organic filler". The organic particles may contain a heat-resistant material. The organic particles may contain, for example, at least one selected from the group consisting of PE, PP, PTFE, PI, PAI, PA, and aramid. The organic particles may be, for example, spherical, rod-like, plate-like, or fibrous. The organic particles may have a D50 of, for example, 0.1 µm to 10 µm or 0.5 µm to 3 µm.

The separator 20 may include, for example, a mixed layer. The mixed layer contains both inorganic particles and organic particles.

### Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. "mol/L" may also be written as "M". The solute contains a supporting salt (Li salt). The solute may contain, for example, an inorganic acid salt, an imide salt, an oxalato complex, or a halide. The solute may contain, for example, at least one selected from the group consisting of LiPF₆, LiBF₄, LiClO₄, LiAsF₆, LiSbF₆, LiN(SO₂F)₂ "LiFSI", LiN(SO₂CF₃)₂ "LiTFSI", LiB(C₂O₄)₂ "LiBOB", LiBF₂(C₂O₄) "LiDFOB", LiPF₂(C₂O₄)₂ "LiDFOP", LiPO₂F₂, FSO₃Li, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratios of the respective components may satisfy a relationship represented by a relational expression of "V_{EC} + V_{FEC} + V_{EMC} + V_{DMC} + V_{DEC} = 10". In the relational expression, "V_{EC}, V_{FEC}, V_{EMC}, V_{DMC}, and V_{DEC}" respectively represent the volume ratios of EC, FEC, EMC, DMC, and DEC. The following relationships are satisfied: "1 ≤ V_{EC} ≤ 4", "0 ≤ V_{FEC} ≤ 3", "V_{EC} + V_{FEC} ≤ 4", "0 ≤ V_{EMC} ≤ 9", "0 ≤ V_{DMC} ≤ 9", "0 ≤ V_{DEC} ≤ 9", and "6 ≤ V_{EMC} + V_{DMC} + V_{DEC} ≤ 9". For example, a relationship of "1 ≤ V_{EC} ≤ 2" or "2 ≤ V_{EC} ≤ 3" may be satisfied. For example, a relationship of "1 ≤ V_{FEC} ≤ 2" or "2 ≤ V_{FEC} ≤ 4" may be satisfied. For example, a relationship of "3 ≤ V_{EMC} ≤ 4" or "6 ≤ V_{EMC} ≤ 8" may be satisfied. For example, a relationship of "3 ≤ V_{DMC} ≤ 4" or "6 ≤ V_{DMC} ≤ 8" may be satisfied. For example, a relationship of "3 ≤ V_{DEC} ≤ 4" or "6 ≤ V_{DEC} ≤ 8" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/114/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, a Solid Electrolyte Interphase (SEI) formation promoter, an SEI formation inhibitor, a gas-forming agent, an overcharging inhibitor, a flame retardant, an antioxidant, an electrode protective agent, or a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group consisting of LiBF₄, LiFSI, LiTFSI, LiBOB, LiDFOB, LiDFOP, LiPO₂F₂, FSO₃Li, LiI, LiBr, HFE, DOX, PC, FEC, and derivatives thereof.

The electrolytic solution may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

### ALL-Solid-State Battery

In some present embodiments, the battery may be an all-solid-state battery. The all-solid-state battery may have a bipolar structure. The all-solid-state battery includes a solid electrolyte instead of the electrolytic solution and the separator 20. The solid electrolyte may be contained also in the positive electrode layer 11 and the negative electrode layer 12. Instead of the separator 20, a solid electrolyte layer separates the negative electrode layer 12 from the positive electrode layer 11. The solid electrolyte layer contains, for example, a solid electrolyte and a binder.

The solid electrolyte may be, for example, a powder. The solid electrolyte may have a D50 of, for example, 0.1 µm or more, 0.2 µm or more, 0.3 µm or more, 0.4 µm or more, 0.5 µm or more, 0.6 µm or more, 0.7 µm or more, 0.8 µm or more, 0.9 µm or more, or 1 µm or more. The solid electrolyte may have a D50 of, for example, 5 µm or less, 4 µm or less, 3 µm or less, 2 µm or less, or 1 µm or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass ceramic (crystallized glass) phase. The crystalline phase may be of, for example, an argyrodite type or an LGPS type. The sulfide solid electrolyte contains Li and sulfur (S). The sulfide solid electrolyte may further contain any component in addition to Li and S.

The sulfide solid electrolyte may contain, for example, at least one selected from the group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and LI₇PS₆.

For example, "LiI-LiBr-Li₃PS₄" refers to a sulfide solid electrolyte generated by mixing LiI, LiBr, and Li₃PS₄ in any amount-of-substance ratio. For example, the sulfide solid electrolyte may be generated by a mechanochemical method. A mixing ratio may be specified by placing a numeral in front of each of the raw materials. For example, "10LiI-15LiBr-75Li₃PS₄" indicates that the mixing ratio is "LiI/LiBr/Li₃PS₄ = 10/15/75 (amount-of-substance ratio)".

The sulfide solid electrolyte may have a composition represented by, for example, a general formula of "xLi₂S-(1-x)P₂S₅". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.7 or less, 0.75 or less, 0.6 or less, 0.5 or less, 0.4 or less, 0.3 or less, 0.2 or less, or 0.1 or less. For example, when "x = 0.75", "xLi₂S-(1-x)P₂S₅" may have a composition of Li₃PS₄.

The sulfide solid electrolyte may have a composition represented by, for example, a general formula of "yLiI-zLiBr-(100-y-z)[xLi₂S-(1-x)P₂S₅]". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

The sulfide solid electrolyte may have a composition represented by, for example, a general formula of "Li_{7-x-2y}PS_{6-x-y}X_{y}". In the general formula, relationships of "0 < 7 - x - 2y", "0 < 6 - x - y", "0 ≤ x", and "0 ≤ y" are satisfied. "X" may contain, for example, at least one selected from the group consisting of fluorine (F), chlorine (Cl), bromine (Br), and iodine (I).

The sulfide solid electrolyte may have a composition represented by, for example, a general formula of "Li₄₋ₓM₁₋ₓPₓS₄". In the general formula, "x" may be, for example, more than 0. 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may contain, for example, at least one selected from the group consisting of Al, Zn, In, Ge, Si, Sn, Sb, Ga, and Bi.

The sulfide solid electrolyte may have a composition represented by, for example, a general formula of "Li₁₀₊ₓGe₁₊ₓP₂₋ₓS₁₂". In the general formula "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS-type crystalline phase.

The halide solid electrolyte may have a composition represented by, for example, a general formula of "Li₆₋ₙₐMₐX₆". In the general formula, "n" represents the oxidation number of "M". "M" may contain, for example, an atom having an oxidation number of +3. "M" may contain, for example, an atom having an oxidation number of +4. "M" may contain, for example, at least one selected from the group consisting of Y, Al, Ti, Zr, Ca, and Mg. For example, a relationship of "0 < a < 2" may be satisfied. "X" may contain, for example, at least one selected from the group consisting of F, Cl, Br, and I.

The halide solid electrolyte may have a composition represented by, for example, a general formula of "Li₃₋ₐTiₐAl₁₋ₐF₆". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

The halide solid electrolyte may have a composition represented by, for example, a general formula of "Li₃YClₐBr₆I_{6-a-b}". In the general formula, a relationship of, for example, "0 ≤ a + b ≤ 6" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

The oxide solid electrolyte may contain at least one selected from the group consisting of LiNbO₃, Li_{1.5}Al_{0.5}Ge_{1.5}(PO₄)₃, La_{2/3-x}Li₃ₓTiO₃, and Li₇La₃Zr₂O₁₂. The hydride solid electrolyte may contain, for example, LiBH₄. The nitride solid electrolyte may contain, for example, Li₃N or Li₃BN₂.

### Preparation of Samples

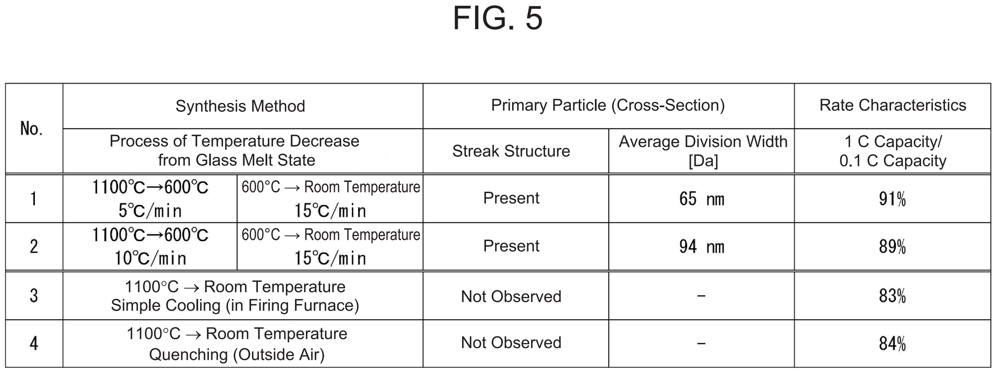

FIG. 5 is a table showing experimental results. According to the following procedure, No. 1 to No. 4 positive electrode active materials were produced.

### No. 1

### Raw Material Mixing

Lithium carbonate, manganese carbonate, iron oxalate, and phosphoric acid are weighed as raw materials in such a manner that a compositional ratio shown in a composition formula of "Li₁Mn_{0.8}Fe_{0.2}PO₄" is achieved. The powder materials other than phosphoric acid are mixed to form a powder mixture. The powder mixture is subjected to grinding and mixing in a mortar until a reaction is terminated while phosphoric acid is added to the powder mixture such that a powder of a first precursor is formed. At this time, generation of gas can be prevented by gradually adding phosphoric acid.

### Vitrification

The powder of the first precursor is placed in a graphite crucible. The graphite crucible is placed in a firing furnace. In an inert atmosphere, firing is performed by the following procedure. First, the temperature in the furnace is increased to 1100°C at a temperature increase rate of 5°C/min. By doing so, the first precursor is considered to become a glass state due to melting. The temperature in the furnace is maintained at 1100°C for 1 hour. After the temperature in the furnace is maintained for 1 hour, cooling is performed until the temperature in the furnace is decreased to 600°C at a temperature decrease rate of 5°C/min. Then, cooling is performed until the temperature in the furnace is decreased to room temperature at a temperature decrease rate of 15°C/min. In this way, a glassy active material block is obtained. The active material block is ground by a mechanical grinding device to form a second precursor.

### Wet Grinding

Fructose is added to the second precursor at a mass fraction of 10% to form a third precursor. The third precursor is ground in a water solvent by a bead mill to form a fourth precursor. During the grinding, beads (grinding medium) having a diameter (ϕ) of 0.3 mm are used. A circumferential speed is 10 m/s. A grinding time is 30 min.

### Firing

The fourth precursor is dried. After drying, the fourth precursor is placed in a graphite crucible. The graphite crucible is placed in a firing furnace. The fourth precursor is fired at 650°C to produce a positive electrode active material (LMFP). The cross-sections (fracture surfaces) of primary particles are evaluated.

### No. 2

A positive electrode active material is produced in the same manner as No. 1 except that the rate of temperature decreases from 1100°C to 600°C during vitrification was changed to 10°C/min.

### No. 3

A positive electrode active material is produced in the same manner as No. 1 except that cooling control during vitrification is not performed but simple cooling (natural cooling) from 1100°C to room temperature is performed in the firing furnace.

### No. 4

A positive electrode active material is produced in the same manner as No. 1 except that during vitrification, the glassy first precursor is taken out of the firing furnace after maintained at 1100°C for 1 hour so as to be quenched by outside air.

### Evaluation

### Production of Coin Cell

A positive electrode active material, an electrically-conductive material (acetylene black), and a binder (PVdF) are mixed to form a mixture. The mixing ratio (mass ratio) among them is "positive electrode active material/electrically-conductive material/binder = 92/5/3". The mixture is dispersed in a solvent (N-methyl-2-pyrrolidone) to form a paste. The solid content concentration of the paste is 50% in terms of mass fraction. The paste is applied onto the surface of an Al foil and dried to form a positive electrode layer. The density of the positive electrode layer is adjusted to 1.8 g/cm³ by roll press to form a positive electrode original plate. The positive electrode original plate is subjected to vacuum drying treatment at 120°C for 12 hours. After drying, a disc sample (diameter: 14 mm) is punched out from the positive electrode original plate.

A coin cell is assembled in a glove box. The configuration of the cell is as follows.
Working electrode: Disk sample (Positive electrode)
Counter electrode: Li foil
Separator: Polymer porous membrane
Electrolytic solution: "EC/DMC = 3/7 (Volume ratio)", LiPF₆ (1 mol/L)
Evaluation of Rate Characteristics

A rate corresponding to 1C is determined based on a discharge capacity (theoretical capacity) determined from the mass of the positive electrode layer applied. "C" is a symbol indicating the rate (hour rate) of an electric current. At a rate of 1C, a theoretical capacity is discharged in 1 hour. At 25°C, a coin cell is charged by constant current-constant voltage (CCCV) charging under the following conditions.
Rate during constant current (CC) charging: 0.1 C
Upper limit charging voltage: 4.3 V
Rate of cut current during constant voltage (CV) charging: 0.01 C

After charging, CC discharging to 3.0 V is performed at a rate of 0.1 C at 25°C to measure a discharge capacity "A" during discharging at 0.1 C. The coin cell is again charged by the above CCCV charging. After charging, CC discharging to 3.0 V is performed at 25°C at a rate of 1 C to measure a discharge capacity "B" during discharging at 1 C. A ratio of "1 C capacity/0.1 C capacity" is determined by a calculation formula of "B/A". It is considered that the larger the ratio "1 C capacity/0.1 C capacity", the better rate characteristics.

### Experimental Results

As shown in FIG. 5, the rate characteristics tend to improve when a streak structure is observed in the cross-section of the primary particle.

## Claims

1. A positive electrode active material comprising a primary particle (1), wherein
the primary particle (1) contains an olivine-type phosphate compound,
the primary particle (1) has a cross-section in at least part of which a streak structure is provided,
the streak structure includes a first region (1a) and a second region (1b),
the second region (1b) contains an ion conductor containing phosphorus at a higher concentration as compared to the first region (1a),
the second region (1b) extends in a streaky manner, and
the first region (1a) is divided into two or more by the second region (1b).

2. The positive electrode active material according to claim 1, wherein both ends of the second region (1b) are positioned in a surface of the primary particle (1).

3. The positive electrode active material according to claim 1, wherein:
the first region (1a) is divided into three or more by the second region (1b); and
an average width (Da) of divided sections in a direction intersecting with a direction in which the second region (1b) extends is 10 nm to 100 nm.

4. The positive electrode active material according to claim 3, wherein the average width (Da) is smaller than 1/2 of maximum Feret diameter (D) of the primary particle (1).

5. The positive electrode active material according to claim 3, wherein the average width (Da) is 65 nm to 94 nm.

6. The positive electrode active material according to any one of claims 1 to 5, further comprising a secondary particle (2), wherein
the secondary particle (2) includes the primary particles (1).

7. The positive electrode active material according to any one of claims 1 to 5, wherein the olivine-type phosphate compound contains at least one selected from the group consisting of lithium iron phosphate, lithium manganese phosphate, and lithium manganese iron phosphate.

8. An electrode comprising a positive electrode layer (11), wherein
the positive electrode layer (11) contains the positive electrode active material according to any one of claims 1 to 5.

9. A battery (100) comprising the electrode according to claim 8.

10. The battery (100) according to claim 9, wherein the battery (100) has a bipolar structure.
